# EUROPÄISCHE PATENTSCHRIFT

(11) **EP 2 715 884 B1**
(45) Veröffentlichungstag und Bekanntmachung des Hinweises auf die Patenterteilung: **05.11.2014**
(21) Anmeldenummer: 12727622.8
(22) Anmeldetag: 26.05.2012
(51) Int. Cl.: H01R 43/042

(54) **VERFAHREN UND ANORDNUNG ZUR GEWICHTETEN ÜBERWACHUNG DES VERSCHLEISSES EINER HANDZANGE ZUM VERPRESSEN VON WERKSTÜCKEN**
PROCESS AND ARRANGEMENT FOR A WEIGHTED MONITORING THE WEAR OF A HAND TOOL FOR CRIMPING WORKPIECES
PROCÉDÉ ET ENSEMBLE DE CONTRÔLE PONDÉRÉ DE L'USURE D'UNE PINCE MANUELLE À SERTIR UNE PIÈCE

(30) Priorität: 30.05.2011 DE 102011050718
(43) Veröffentlichungstag der Anmeldung: 09.04.2014
(73) Patentinhaber: Rennsteig Werkzeuge GmbH, 98547 Viernau (DE)
(72) Erfinder: WAGNER, Thomas, 98587 Bermbach (DE); ZMISKOL, Sascha, 96046 Bamberg (DE); MARR, Andreas, 98587 Bermbach (DE)
(74) Vertreter: Engel, Christoph Klaus
(86) Internationale Anmeldenummer: PCT/EP2012/059924
(87) Internationale Veröffentlichungsnummer: WO 2012/163866

(56) Entgegenhaltungen:
- WO-A1-2010/136346
- DE-A1- 10 060 165
- DE-U1- 29 806 179
- DE-U1- 29 815 312

## Beschreibung

Die Erfindung betrifft ein Verfahren zur Überwachung des Verschleißes einer Handzange zum Verpressen von Werkstücken sowie eine hierfür geeignete Anordnung. Weiterhin betrifft die Erfindung eine Handzange, bei der der Verschleiß überwacht wird. Insbesondere sind solche Handzangen betroffen, bei denen Presselemente auf ein Werkstück gepresst werden und ein durch Betätigung der Presszange zu erreichendes Pressmaß mit einer Voreinstellungsvorrichtung einstellbar ist. Speziell eignet sich die Erfindung für den Einsatz an Crimpzangen, deren Crimpmaß einstellbar ist.

Bei Crimpmaschinen ist es bekannt, den Verschleiß zu überwachen. Beispielsweise werden in der EP 0 419 129 B1 zur Beurteilung des Verschleißes des Crimpwerkzeuges mittels eines Dehnungsmessers Maßänderungen in der Crimppresse erfasst und mit einem Bereich akzeptabler Crimpkräfte für eine spezielle Crimphöhe verglichen. Wird eine bestimmte Crimpkraft aufgrund Verschleißes nicht mehr erreicht, wird ein Einstellsignal ausgegeben, das zum Nachstellen der Crimpkontakte auffordert.

Aus der DE 10 2004 009 489 A1 ist eine Einstellungsanzeige für Crimpzangen bekannt, bei denen die auf die Crimpkontakte einwirkenden Crimpstempel von einem in einem Kurvenkörper geführten Schwenkkolben in die Crimpstellung gebracht werden. Eine gewählte Voreinstellung der Crimpzange wird durch eine elektronische Anzeige angezeigt. Kommt es zum Verschleiß der Crimpstempel oder des Kurvenkörpers, so ist die Anzeige des Wertes für die Voreinstellung jedoch mit einem Fehler behaftet.

Die DE 296 02 238 U1 zeigt ein Prüfgerät zur Überprüfung von Pressgeräten oder deren die Pressbacken tragenden Teile. Das Pressgerät oder ein Teil desselben ist in einer bestimmten Position in das Prüfgerät einzulegen. Beim Prüfvorgang wird eine Leerverpressung durchgeführt, wobei nach Aufbringen des Pressdrucks die Spaltbreite zwischen zwei gegenüberliegenden Stirnseiten benachbarter Pressbacken vermessen wird. Die Spaltbreite wird der Bedienperson angezeigt, sodass diese entscheiden kann, ob das Pressgerät noch weiter verwendet werden kann oder nicht. Diese Lösung ist nur für Pressgeräte geeignet, bei denen die Pressbacken bei Betätigung des Pressgerätes grundsätzlich aneinander anschlagen bzw. mit denen nur ein einziges Pressmaß verwirklicht werden kann.

Die DE 200 12 887 U1 zeigt eine Vorrichtung für die Verschleißprüfung an Presszangen. Diese Vorrichtung umfasst ein Prüfelement, welches einen Indikator aufweist und beim Verpressen eines Gegenstandes zwischen den Stirnseiten der Pressbacken der Presszange anzuordnen ist. Der Indikator wird unterhalb einer vorbestimmten vergleichsweise kleinen Spaltbreite verpresst. Auch diese Lösung ist ausschließlich für Presszangen geeignet, bei denen die Pressbacken bei Betätigung der Presszange grundsätzlich aneinander anschlagen bzw. mit denen nur ein einziges Pressmaß verwirklicht werden kann.

In der EP 2 025 475 A2 ist ein Pressgerät zum Verbinden von Werkstücken und ein Verfahren zur Durchführung einer technischen Diagnose des Pressgerätes beschrieben. In einem Informationsspeicher des Gerätes werden eine die Hubzahl des Pressgerätes repräsentierende Information und wenigstens eine Betriebsinformation pro Betriebssekunde des Antriebes dauerhaft gespeichert. Als Betriebsinformation des Antriebes werden beispielsweise die Leistungsaufnahme des Elektromotors oder die Daten einer Druckmessung eines elektrohydraulischen Antriebes und/oder die Daten einer Kraftmessung im Bereich des Presswerkzeuges als Betriebsinformation gespeichert. Zusätzlich abgespeicherte Informationen können die Temperatur und/oder Datum bzw. Zeitpunkt des Betriebes des Antriebs umfassen. Anhand der gespeicherten Informationen ist es möglich, den Betrieb des Pressgerätes in nachhinein zu analysieren um beispielsweise einen allmählich auftretenden Verschleiß festzustellen, sodass ggf. Prognosen über die Anzahl der voraussichtlich noch erfolgreich durchführbaren Pressvorgänge gemacht werden können.

Aus der US 2008/0276678 A1 ist eine Crimpzange mit einer Anzeige bekannt, die einen Kraftsensor, einen Positionssensor, eine Datenverarbeitungseinheit und eine Anzeige umfasst. In der Anzeige ist durch farbige LED's (rot, grün) die Qualität des Crimpergebnisses anzeigbar.

Aus der DE 10 2009 026 470 A1 ist ein Verfahren und eine Vorrichtung zur Überwachung des Verschleißes an einer Handzange bekannt, bei der das Pressmaß mittels einer Voreinstellungsvorrichtung einstellbar ist. Dabei wird zunächst eine Referenzstellung der Einstellungsvorrichtung erfasst, bei der die Presselemente noch keinem Verschleiß unterliegen. Das Messen der Verschleißstellung der Voreinstellungsvorrichtung wird nach einer bestimmten Anzahl von Betätigungen wiederholt. Wenn die Verschleißmessung nicht durch den Nutzer in den vorgegebenen Abständen ausgeführt wird, kann der Verschleiß nicht erfasst und eine normgenaue Verpressung nicht sichergestellt werden.

Die Aufgabe der Erfindung besteht nun darin, den Verschleiß einer Handzange benutzungsbezogen zu überwachen und bei prognostiziertem Erreichen eines definierten Verschleißgrenzwertes eine Kalibrierung zu erzwingen. Gleichzeitig soll der Abstand zwischen erzwungenen Kalibrierungsvorgängen möglichst groß gehalten werden, um den Benutzer nicht zu häufig mit diesem Vorgang zu behelligen.

Die Aufgabe wird durch ein Verfahren mit den Merkmalen des Anspruchs 1, durch eine Anordnung zur Durchführung dieses Verfahrens nach Anspruch 8 und durch eine Handzange gemäß Anspruch 9 gelöst.

Ein erfindungsgemäßes Verfahren dient der laufenden Überwachung des Verschleißes einer Handzange. Dabei kommen solche Handzangen in Betracht, bei denen Presselemente auf ein Werkstück pressbar sind und ein bestimmtes gewünschtes Pressmaß mit einer Voreinstellungsvorrichtung einstellbar ist.

Das Verfahren beruht auf dem Grundgedanken, dass der tatsächliche Verschleiß vom eingestellten Pressmaß bei der Pressung abhängig ist. Das heißt, bei der Verwendung eines kleinen Werkstückes (z.B. eines kleinen Crimpkontaktes) liegt ein kleines Pressmaß vor, bei dem eine verhältnismäßig geringe Kraft zum Verpressen erforderlich ist, woraus eine geringe Belastung und ein geringer Verschleiß resultieren, im Vergleich mit einer Verpressung großer Werkstücke mit großem Pressmaß, bei welcher aufgrund größerer Kräfte ein größerer Verschleiß auftritt.

Die Vorteile der Erfindung sind insbesondere darin zu sehen, dass für eine Handzange sinnvolle und anwendungsspezifische Kalibrierabstände definiert und überwacht werden, und eine aktive Aufforderung zum Kalibrieren erfolgt. Dadurch können zum einen zweitaufwändige nicht erforderliche Kalibrierungsvorgänge vermieden werden, andererseits erfolgt bei erhöhtem Nutzungsumfang und daraus resultierenden erwarteten Verschleißwerten eine rechtzeitige Aufforderung zur Kalibrierung. Somit kann immer ein korrektes Crimpergebnis erreicht werden. Gegebenenfalls kann die Handzange bei Erreichen eines theoretischen Verschleißwertes gesperrt und eine weitere Benutzung verhindert werden, bis eine erneute Kalibrierung erfolgt ist.

Bei dem Verfahren wird zunächst jede Betätigung der Handzange unter Verknüpfung mit dem eingestellten Pressmaß gezählt. Für verschiedene Pressmaße sind in einem Speicher verschiedene Verschleißprognosewerte hinterlegt, die beispielsweise empirisch vom Hersteller ermittelt wurden. Für jede vollzogene Betätigung wird in einem nächsten Schritt der zugehörige Verschleißprognosewert aus dem Speicher ausgelesen und ein Gesamtverschleißwert durch Aufsummieren der Verschleißprognosewerte mehrerer Betätigungen ermittelt und im Speicher abgelegt.

Die Verschleißprognosewerte sind vorzugsweise durch Versuche zu ermitteln oder durch Erfahrungswerte gegeben. Ebenso können mathematische Funktionen hinterlegt sein, um die erwarteten Verschleißprognosewerte zu berechnen.

Weiterhin können in bevorzugten Ausführungsformen des Verfahrens die Anzahl der Betätigungen je Pressmaß gespeichert werden. Dazu wird für jede Klasse von Pressmaßen ein separater Zähler vorgesehen.

Erreicht der Gesamtverschleißwert einen definierten Grenzwert, so erfolgt die Ausgabe einer Aufforderung zur Kalibrierung der Handzange. Die Ausgabe erfolgt vorzugsweise über eine an der Handzange vorhandene Anzeige, kann aber auch auf andere Art, beispielsweise durch ein akustisches Signal oder eine mechanische Sperre erfolgen. Der Grenzwert wird beispielsweise durch eine einzuhaltende Norm definiert oder vom Hersteller vorgegeben.

Die Kalibrierung selbst kann auf die bekannte, beispielsweise in der DE 10 2009 026 470 A1 beschriebene Weise erfolgen.

Bei der Kalibrierung wird ein tatsächlicher Verschleiß bestimmt, der ebenfalls im Speicher hinterlegt wird. Dieser soll vorzugsweise auch in der Anzeige darstellbar sein, beispielsweise in Verbindung mit einer Restnutzungsanzeige in Prozent. Der aus den Verschleißprognosewerten theoretisch ermittelte Gesamtverschleißwert wird zurückgesetzt. Der im Kalibriervorgang angewendete Korrekturwert selbst wird ebenfalls vorzugsweise in einem separaten Zähler aufsummiert.

Bei der weiteren Bedienung der Handzange erfolgt die Aufsummierung vorzugsweise genau so, wie im Zyklus bis zur ersten Kalibrierung. Bei erneutem Erreichen eines Grenzwertes des Gesamtverschleißes erfolgt wieder eine Aufforderung zur Kalibrierung.

Ist die Gesamtlebensdauer erreicht, d.h. der maximal zulässige Verschleiß eingetreten, soll die Zange nicht mehr benutzt werden. Dazu kann in der Anzeige eine Warnung ausgegeben werden oder in einer bevorzugten Ausführungsform kann beispielsweise eine mechanische Sperre der Handzange ausgelöst werden, durch die keine Betätigung mehr erfolgen kann.

Gemäß einer weiteren bevorzugten Ausführungsform kann mithilfe eines geeigneten Sensors erfasst werden, ob tatsächlich eine relevante Presskraft bei der Betätigung der Zange erzeugt wurde. Auf diese Weise lassen sich Leerbetätigungen ausblenden, die von einem einfachen Zähler zwar erfasst werden, bei denen aber kein Verschleiß an der Zange auftritt. Die Genauigkeit der Verschleißprognose lässt sich dadurch weiter steigern. Ein solcher Sensor kann als Kraftsensor in den Handgriffen oder an anderer im Kraftfluss der Zange liegenden Bauelementen oder unmittelbar an bzw. in den Presselementen integriert werden.

Gemäß einer abgewandelten Ausführungsform kann die Abweichung zwischen dem realen Verschleiß, der bei der Kalibrierung ermittelt wird, und dem aufsummierten theoretischen Verschleiß für eine angepasste künftige Prognose berücksichtigt werden. Liegt der reale Verschleiß bei der ersten erzwungenen Kalibrierung beispielsweise bei nur 50 % des theoretisch bestimmten Verschleißwertes, können die gespeicherten Verschleißprognosewerte in künftigen Perioden mit einem Faktor < 1 beaufschlagt werden. Der Grenzwert sollten jedoch immer so gewählt werden, dass die zulässigen Toleranzen für die Presselemente der Zange keinesfalls überschritten werden, bevor die nächste Kalibrierung erzwungen wird. Dazu lassen sich natürlich auch die Kalibrierungszyklen an den jeweiligen Verschleißstand der Zange anpassen.

Eine erfindungsgemäße Anordnung zur Überwachung des Verschleißes einer Handzange umfasst einen Datenspeicher. Im Datenspeicher sind zu verschiedenen einstellbaren Pressmaßen theoretische Verschleißprognosewerte hinterlegt. Im Datenspeicher sind außerdem Speicherplätze zu Speicherung der Überwachungsdaten des Verfahrens vorgesehen. Zu den Überwachungsdaten gehören vorzugsweise ein Zähler je Pressmaß, ein Gesamtzähler aller Pressungen, ein Zähler der Kalibriervorgänge sowie der tatsächlich ermittelte Verschleiß beim letzten Kalibriervorgang. Die erfindungsgemäße Vorrichtung umfasst weiterhin eine Vorrichtung zur Ermittlung der Betätigung der Handzange. Dies kann beispielsweise ein Endlagenschalter sein, der an einem Anschlag zwischen den Handgriffen der Handzange anzuordnen ist. Die Aufsummierung der Verschleißprognosewerte erfolgt durch eine Recheneinheit, die vorzugsweise durch ein integriertes Mikrokontrollersystem gebildet ist. Die Vorrichtung umfasst weiterhin eine Anzeigeeinheit zur Anzeige verschiedener Daten der Verschleißkontrolle.

Eine bekannte Zange zum Verpressen von Werkstücken kann durch das erfindungsgemäße Verfahren und die erfindungsgemäße Anordnung auf einfache Art und Weise aufgerüstet werden. Wenn die Zange beispielsweise bereits eine Anzeige, einen Betätigungszähler und einen Mikroprozessor umfasst, kann durch ein werkseitiges Softwareupdate die automatische Überwachungsfunktionalität in die Handzange integriert werden.

Weitere Vorteile, Einzelheiten und Weiterbildungen der Erfindung ergeben sich aus der nachfolgenden Beschreibung einer bevorzugten Ausführungsform der erfindungsgemäßen Handzange, unter Bezugnahme auf die Zeichnung. Es zeigen:
- Fig. 1:: eine Ansicht einer Handzange, welche mit einer erfindungsgemäßen Anordnung ausgestattet ist, unter Darstellung verdeckter Kanten;
- Fig. 2:: eine weitere Ansicht der in Fig. 1 gezeigten Handzange mit einer an einen unteren Anschlagpunkt eingestellten Voreinstellungsvorrichtung;
- Fig. 3:: einen Programmablaufplan einer bevorzugten Ausführungsform des erfindungsgemäßen Verfahrens.

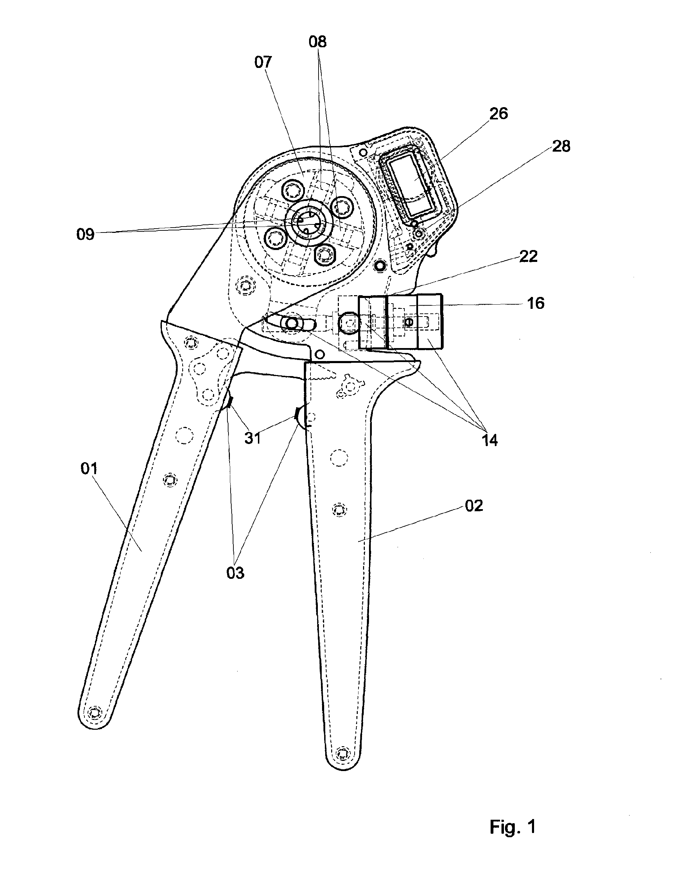

Fig. 1 zeigt eine bevorzugte Ausführungsform einer mit einer erfindungsgemäßen Anordnung ausgestatteten Handzange, nämlich eine Crimpzange. In dieser Darstellung sind verdeckte Körperkanten durch gestrichelte Linien dargestellt. Bei der Handzange handelt es sich um eine handbetätigte Crimpzange zum Vercrimpen von elektrischen Anschlusselementen, deren Funktionsweise ausführlich in der DE 10 2009 026 470 A1 beschrieben ist, welche in den Offenbarungsgehalt dieser Anmeldung eingeschlossen wird.

Die Crimpzange umfasst einen ersten Handhebel 01 und einen zweiten Handhebel 02, die gegeneinander verschwenkbar sind. Im geschlossenen Zustand der Crimpzange schlagen die beiden Handhebel 01, 02 an Anschlagflächen 03 aneinander an.

In einem Führungskörper 07 sind vier durch Einkerbelemente gebildete Presselemente 08 radial beweglich angeordnet. Die vier Presselemente 08 bilden gemeinsam ein Crimpgesenk und weisen jeweils eine Ambossfläche 09 auf, welche dafür vorgesehen ist, eine Kerbe in das zu verpressende elektrische Verbindungselement einzupressen. Durch ein Betätigen der Crimpzange, werden die vier Presselemente 08 aufeinander zu bewegt. Befindet sich ein zu verpressendes elektrisches Verbindungselement zwischen den Ambossflächen 09 der Presselemente 08, so wird dieses verpresst, wobei die Ambossflächen 09 der Presselemente 08 Kerben in das elektrische Verbindungselement einpressen.

Das Pressmaß, das heißt, der beim vollständigen Schließen der Crimpzange erzielte Abstand zwischen den Ambossflächen 09 der Presselemente 08, kann über eine Voreinstellungsvorrichtung 14 eingestellt werden. Die Verstellung des Pressmaßes mit der Voreinstellungsvorrichtung 14 dient dazu, die Handzange an unterschiedlich große elektrische Verbindungselemente anzupassen und außerdem auch dazu, einen Verschleiß der Handzange, insbesondere einen Verschleiß der Ambossflächen 09 der Presselemente 08 und ggf. der Nockenanschlagsflächen 11 ausgleichen zu können.

Die Stellung der Voreinstellungsvorrichtung 14 ist mit einem Drehgeber 22 messbar, welcher elektrisch mit einem Mikrokontrollersystem verbunden ist. Das Mikrokontrollersystem ist weiterhin mit einer digitalen Anzeige 26 elektrisch verbunden, auf welcher Informationen alphanumerisch angezeigt werden können.

Bei der gezeigten Ausführungsform der erfindungsgemäßen Handzange beträgt das einstellbare Pressmaß beispielsweise zwischen 0,65 mm und 3 mm.

Die Handzange kann auch für andere Größenordnungen des zu erreichenden Pressmaßes ausgelegt werden, beispielsweise im Submillimeter- oder im Zentimeterbereich.

Nach der Herstellung der Handzange ist diese vor einer erstmaligen Benutzung einem Kalibriervorgang wie in der DE 10 2009 026 470 A1 beschrieben, zu unterziehen. Für die Kalibrierung ist ein Kalibrierdorn mit einem dem System bekannten Durchmesser (nicht gezeigt) zu verwenden, der bei der gezeigten Ausführungsform einen Durchmesser von z.B. 2 mm hat. Durch die Übernahme des mit dem Kalibrierdorn abgeglichenen Pressmaßes ist die Handzange in einen betriebsbereiten Zustand versetzt.

Die Handzange kann nun durch ein Verstellen der Voreinstellungsvorrichtung 14 an unterschiedlich große Pressmaße angepasst werden, wobei das aktuell eingestellte Pressmaß in der Anzeige 26 angezeigt wird.

Im Mikrokontrollersystem ist das erfindungsgemäße Verfahren implementiert. Zur Zählung der Betätigungen ist in der dargestellten Ausführungsform ein Endlagenschalter 31 an den Anschlagflächen 03 der Handgriffe 01, 02 vorgesehen, der mit dem Mikrokontrollersystem 23 verbunden ist. Der Endlagenschalter kann auch an anderer Stelle angebracht werden, beispielsweise in der Nähe des Drehgebers. Die Betätigung des Endlagenschalters kann ebenso durch eine vorgesehene Ratsche beim Schließvorgang der Zange erreicht werden.

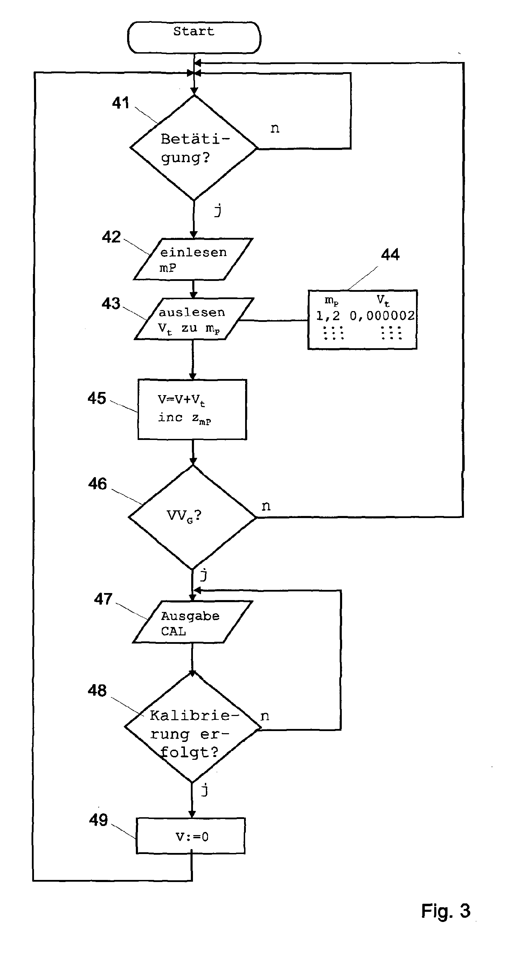

In der nachfolgend beschriebenen Weise wird nun bei jeder Betätigung der Handzange ein theoretischer Verschleißprognosewert aufsummiert. Der jeweils zu verwendende Verschleißprognosewert wird in Abhängigkeit vom eingestellten Pressmaß aus einem Speicher ausgelesen (näheres wird weiter unten unter Bezugnahme auf Fig. 3 beschrieben). Ist ein bestimmter Grenzwert des Verschleißprognosewertes (beispielsweise 0,01 mm) überschritten, so wird dem Benutzer in der Anzeige 26 eine Aufforderung zur Kalibrierung (CAL) angezeigt. Möglich ist zu diesem Zeitpunkt auch die Blockade der Zange, um eine weitere Verwendung erst nach Durchführung der Kalibrierung zu gestatten.

Für den Kalibriervorgang ist die Handzange zu schließen und das Pressmaß mithilfe der Voreinstellungsvorrichtung 14 derart einzustellen, dass der Kalibrierdorn ohne Spiel zwischen die Ambossflächen 09 der Presselemente 08 gleitet. Ist es tatsächlich zu einem Verschleiß gekommen, so wird die nunmehr gewählte Stellung der Voreinstellungsvorrichtung 14 von der Stellung der Voreinstellungsvorrichtung 14 während des vorhergehenden Kalibriervorganges abweichen. Diese Abweichung ist durch das Mikrokontrollersystem 23 anhand einer Differenz von elektrischen Impulsen des Drehgebers 22 messbar. Da der Zusammenhang zwischen der Verstellung der Voreinstellungsvorrichtung 14 und der Änderung des Pressmaßes bekannt ist, kann diese Differenz an Impulsen des Drehgebers 22 in ein Verschleißmaß für den tatsächlichen Verschleiß der Ambossflächen 09 umgerechnet werden. Dieses tatsächliche Verschleißmaß wird im Mikrokontrollersystem 23 gespeichert und ist in der Anzeige 26 direkt oder umgerechnet auf eine Restlebensdauer darstellbar. Angezeigt wird beispielsweise bei einer neuen Zange "100%", dann in Abhängigkeit vom Verschleiß rückwärts in 1%-Schritten, also 99%, 98% usw.

Der aufsummierte Verschleißprognosewert wird nach jedem Kalibriervorgang zurückgesetzt. Im Mikrokontrollersystem werden die Anzahl der Kalibrierungen, die Anzahl der Crimpungen gesamt und die Anzahl der Crimpungen je Pressmaß gespeichert. Aus diesen Daten können herstellerseitig für nachfolgende Software-Versionen die theoretischen Verschleißprognosewerte weiter angenähert werden.

Beträgt das bestimmte tatsächliche Verschleißmaß mehr als ein voreingestelltes zulässiges Verschleißmaß, so zeigt das Mikrokontrollersystem 23 in der Anzeige 26 eine Fehlermeldung "E1" an. Der Benutzer der Handzange weiß nun, dass die Ambossflächen 09 der Presselemente 08 derart verschlissen sind, dass die Handzange nicht mehr eingesetzt werden darf.

Das voreingestellte zulässige Verschleißmaß beträgt bei der gezeigten Ausführungsform der Handzange beispielhaft 0,1 mm. Es wäre dem Benutzer weiterhin möglich, mithilfe der Voreinstellungsvorrichtung 14 ein zu erzielendes Pressmaß von beispielsweise 1,5 oder 2,0 mm exakt einzustellen und die Anzeige des Pressmaßes exakt darauf zu kalibrieren, jedoch wird der Benutzer durch die Fehlermeldung und/oder eine mechanische Blockierung der Zange davon abgehalten. Dadurch wird verhindert, dass der Benutzer Crimpvorgänge durchführt, bei denen die Ambossflächen 09 der Presselemente 08 mehr als zulässig verschlissen sind, beispielsweise wenn die Spitzen der Ambossflächen 09 abgeflacht sind.

Wird der zweite Taster 28 für eine vorbestimmte Zeitdauer betätigt, so werden mehrere Werte nacheinander in der Anzeige 26 angezeigt. Beispielsweise wird zunächst eine Seriennummer der Handzange angezeigt. Als nächster Wert wird der bei der zuletzt durchgeführten Kalibrierung ermittelte tatsächliche Verschleißwert bzw. eine Restnutzungsdauer in % angezeigt. Als nächstes kann dasjenige Pressmaß angezeigt werden, welches bei der ersten Kalibrierung der Handzange für die Bezugstellung der Voreinstellungsvorrichtung 14 berechnet wurde. Es handelt sich somit um das kleinste einstellbare Pressmaß, welches bei der Handzange im unverschlissenen Zustand einstellbar war. Zuletzt könnte die Anzahl der seit der Herstellung der Handzange durchgeführten Kalibrierungen angezeigt werden. Nach jeder Kalibrierung wird im Mikrokontrollersystem 23 ein Zähler inkrementiert, welcher die Anzahl der bislang durchgeführten Kalibrierungen repräsentiert.

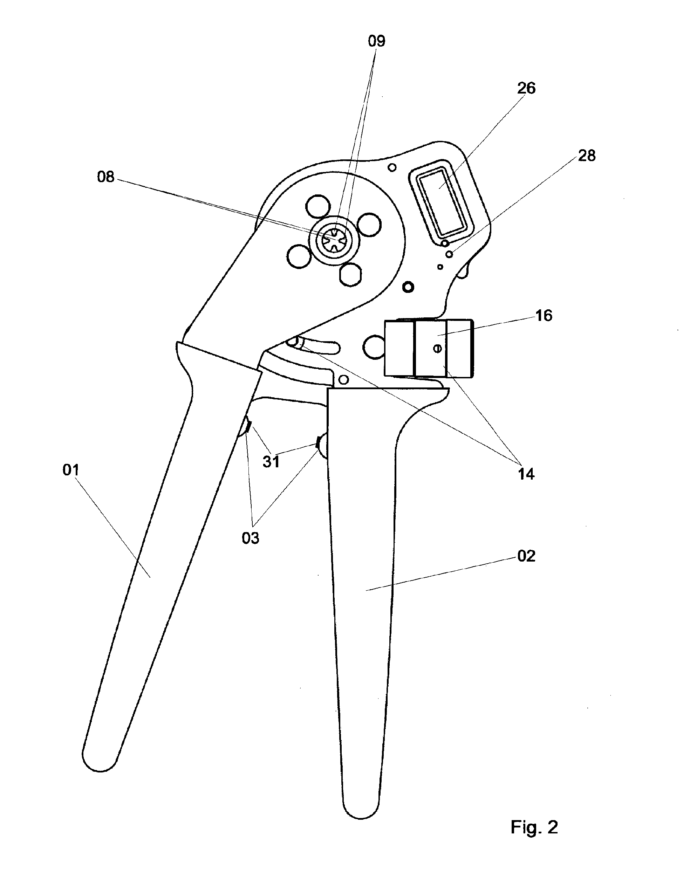

Fig. 2 zeigt die in Fig. 1 gezeigte Handzange in einer Ansicht, bei welcher die verdeckten Kanten nicht dargestellt sind. Die Voreinstellungsvorrichtung 14 befindet sich im Gegensatz zu dem in Fig. 1 gezeigten Zustand der Handzange an deren unteren Anschlag.

In Fig. 3 ist ein beispielhafter Ablaufplan des erfindungsgemäßen Verfahrens dargestellt, das in das Mikrokontrollersystem 23 implementiert ist.

Das Verfahren startet vorzugsweise mit dem Einstellen des Pressmaßes an der Handzange. In einem Verfahrensschritt 41 wird die Betätigung der Zange vorzugsweise mittels des Endlagenschalters 31 abgefragt und erfasst. In einem nächsten Schritt 42 wird ein eingestelltes Pressmaß m_{P} aus der Voreinstellungsvorrichtung 14 vorzugsweise mittels des Drehgebers 22 eingelesen. Es ist aber ebenso möglich, dass das Pressmaß m_{P} direkt bei der Einstellung mittels der Voreinstellungsvorrichtung 14 im Mikrokontrollersystem 23 gespeichert und von dort eingelesen wird. Im Schritt 43 wird ein Verschleißprognosewert Vₜ für das eingestellte Pressmaß aus einem Speicher 44 ausgelesen. Im Speicher 44 sind dazu zahlreiche Verschleißprognosewerte Vₜ zu den typischen zugehörigen Pressmaßen m_{P} hinterlegt. Ebenso kann durch den Mikrokontroller eine Berechnung von Verschleißprognosewerten für Zwischenwerte der Pressmaße erfolgen. Die gespeicherten Verschleißprognosewerte wurden beispielsweise in einem Dauertest für verschiedene Pressmaße m_{P} vom Hersteller ermittelt. In einem Beispielfall wurde für einen Prüfdraht mit einem Durchmesser von 2,67 mm bei einem eingestellten Pressmaß von 1,2 mm wurde ein definierter Verschleiß von 0,1 mm bei 50.000 Betätigungen nachgewiesen. Dies entspricht einem theoretischen Verschleißprognosewert Vₜ von 2 nm je Pressung. Vorteilhafterweise sind 24 Pressmaße m_{P} (Klassen) im Einstellbereich von 0,6mm bis 3,2 mm vorgesehen.

Im Schritt 45 wird der Verschleißwert zu einem Gesamtverschleiß V aufsummiert und zumindest der Zähler z_{mP} des zugehörigen Pressmaßes inkrementiert.

In einem nächsten Schritt 46 wird abgefragt, ob der ermittelte Gesamtverschleiß V einen definierten Grenzwert V_{G} (z.B. 0,01 mm) erreicht oder übersteigt. Wenn dies der Fall ist, erfolgt eine Ausgabe 47 zur Aufforderung der Kalibrierung auf der Anzeige 26. Dies ist für den Bediener der Hinweis, die Handzange erst nach einer Kalibrierung wieder zu benutzen. Ggf. kann eine mechanische Sperre sicherstellen, dass erst eine Kalibrierung erfolgen muss, bevor die Handzange wieder betätigt werden kann. Ergibt eine Abfrage 48, dass die Kalibrierung erfolgt ist, wir der Gesamtverschleiß V zurückgesetzt. Bei der Kalibrierung erfolgt separat die Ermittlung des tatsächlichen Verschleißes in bekannter Weise. Dieser wird im Speicher hinterlegt und durch die Anzeige als Restnutzungsdauer in % darstellbar.

### Bezugszeichenliste

- 01: - erster Handhebel
- 02: - zweiter Handhebel
- 03: - Anschlagflächen
- 07: - Führungskörper
- 08: - Presselement
- 09: - Ambossfläche
- 14: - Voreinstellungsvorrichtung
- 16: - Rändelschraube
- 22: - Drehgeber
- 23: - Mikrokontrollersystem
- 26: - digitale Anzeige
- 28: - zweite Taste
- 31: - Endlagenschalter
- 41: - 43 Verfahrensschritte
- 44: - Speicher
- 45: - 49 Verfahrensschritte

## Patentansprüche

1. Verfahren zur Überwachung des Verschleißes einer Handzange, mit welcher Presselemente (08) auf ein Werkstück pressbar sind und an der ein durch Betätigung der Presszange erreichbares vorbestimmtes Pressmaß m_{P} mit einer VoreinstellungsVorrichtung (14) einstellbar ist, wobei das Verfahren durch die folgenden Schritte gekennzeichnet wird :
- Erfassen der Betätigung der Handzange und des dabei jeweils voreingestellten Pressmaßes m_{P};
- Auslesen eines vorgegebenen Verschleißprognosewertes Vₜ für das voreingestellte Pressmaß aus einem Speicher;
- Ermitteln eines erwarteten Gesamtverschleißwertes V durch Aufsummieren der Verschleißprognosewerte Vₜ bei der erfassten Betätigung;
- Überprüfen, ob der aufsummierte Gesamtverschleißwert V einen definierten Grenzwert V_{G} erreicht hat und Ausgabe einer Kalibrierungsaufforderung, wenn dies der Fall ist.

2. Verfahren nach Anspruch 1, **dadurch gekennzeichnet, dass** das Erfassen der Betätigung von der Auslösung eines Endlagenschalters oder vom Erfassen einer durch einen Kraftsensor ermittelten vorbestimmten Betätigungskraft an der Handzange abhängig ist.

3. Verfahren nach Anspruch 1 oder 2, **dadurch gekennzeichnet, dass** die Verschleißprognosewerte Vₜ je Pressmaß m_{P} in einem Speicher (44) hinterlegt sind.

4. Verfahren nach Anspruch 2, soweit die Betätigungskraft ermittelt wird, **dadurch gekennzeichnet, dass** die Ermittlung des Verschleißprognosewertes durch Aufsummierung von kraftabhhängigen Verschleißprognosewerten erfolgt, welche in einem Speicher hinterlegt sind.

5. Verfahren nach einem der Ansprüche 1 bis 4, **dadurch gekennzeichnet, dass** eine Meldung zum Verschleißstatus ausgegeben wird und/oder ein Sperrsignal generiert wird, wenn der Gesamtverschleißwert V den bestimmten Grenzwert V_{G} übersteigt.

6. Anordnung zur Überwachung des Verschleißes einer Handzange mittels eines Verfahrens nach einem der Ansprüche 1 bis 5, **gekennzeichnet durch** :
- einen Datenspeicher (44), in welchem Verschleißprognosewerte Vₜ gespeichert sind;
- ein Mittel zum Erfassen der Betätigung der Handzange;
- eine Recheneinheit zur Aufsummierung der Verschleißprognosewerte je erfasster Betätigung zu einem Gesamtverschleißwert V;
- eine Anzeigeeinheit (26) zur Anzeige einer Meldung, wenn der aufsummierte Gesamtverschleißwert V einen definierten Grenzwert V_{G} erreicht.

7. Anordnung nach Anspruch 6, **dadurch gekennzeichnet, dass** das Mittel zum Erfassen der Betätigung einen Endlagenschalter (31) oder einen Kraftsensor umfasst.

8. Anordnung nach Anspruch 6 oder 7, **dadurch gekennzeichnet, dass** der Datenspeicher (44) und die Recheneinheit durch ein Mikrokontrollersystem gebildet sind und die Anzeigeeinheit eine Digitalanzeige (26) ist, die mit dem Mikrokontrollersystem gekoppelt ist.

9. Handzange mit Presselementen, die auf ein Werkstück pressbar sind, **dadurch gekennzeichnet, dass** sie eine Anordnung zur Ermittlung des Verschleißes nach einem der Ansprüche 6 bis 8 umfasst.

10. Handzange nach Anspruch 9, **dadurch gekennzeichnet, dass** in der Anzeigeeinheit (26) wahlweise das eingestellte Pressmaß m_{P}, der ermittelte Gesamtverschleiß V oder eine Restlebensdauer darstellbar ist.

## Claims

1. Method for monitoring the wear of a hand pliers, with which crimping elements (08) can be pressed onto a workpiece and on which a predetermined degree of crimping m_{P} to be obtained by actuating the crimping pliers can be set using a presetting device (14), wherein the method is **characterized by** the following steps:
- detecting the actuation of the hand pliers and of the respectively preset degree of crimping m_{P};
- reading out a predetermined wear prognosis value Vₜ for the preset degree of crimping from a memory;
- determining an expected total wear value V by adding up the wear prognosis values Vₜ for the actuation detected;
- verifying whether the cumulative total wear value V has reached a defined threshold V_{G} and, if that is the case, issuance of a calibration request.

2. The method according to claim 1, **characterized in that** detection of the actuation is dependent on the triggering of a limit switch or on the detection of a predefined actuation force on the hand pliers ascertained by a force sensor.

3. The method according to claim 1 or 2, **characterized in that** the wear prognosis values Vₜ for each degree of crimping m_{P} are stored in a memory (44).

4. The method according to claim 2, in which the actuation force is determined, **characterized in that** the wear prognosis value is determined by adding up force-dependent wear prognosis values that are stored in a memory.

5. The method according to one of claims 1 to 4, **characterized in that** a message on the wear status is output and/or a lock signal is generated when the total wear value V exceeds the defined threshold V_{G}.

6. Arrangement for monitoring the wear of a hand pliers using the method according to one of claims 1 to 5, **characterized by**:
- a data memory (44) in which wear prognosis values Vₜ are stored;
- a means for detecting the actuation of the hand pliers;
- a computing unit for adding up the wear prognosis values for each detected actuation to arrive at a total wear value V;
- a display unit (26) for displaying a message if the cumulative total wear value V reaches a defined threshold V_{G}.

7. The arrangement according to claim 6, **characterized in that** the means for detecting the actuation comprises a limit switch (31) or a force sensor.

8. The arrangement according to claim 6 or 7, **characterized in that** the data memory (44) and the computing unit are formed by a microcontroller system and the display unit is a digital display (26) that is coupled to the microcontroller system.

9. Hand pliers having crimping elements that can be pressed onto a workpiece, **characterized in that** it comprises an arrangement for determining the wear according to one of claims 6 to 8.

10. The hand pliers according to claim 9, **characterized in that**
the preset degree of crimping m_{P}, the total wear value V determined or the remaining service life may be selectively represented in the display unit (26).

## Revendications

1. Procédé de surveillance de l'usure d'une pince manuelle, avec laquelle des éléments à sertir (08) peuvent être sertis sur une pièce et sur laquelle une mesure de sertissage m_{P} pouvant être atteinte en actionnant la pince à sertir peut être réglée avec un dispositif de pré-réglage (14), sachant que le procédé est **caractérisé par** les étapes suivantes :
- détection de l'actionnement de la pince manuelle et de la mesure de sertissage m_{P} respective pré-réglée ;
- lecture d'un valeur de pronostic d'usure prédéfinie Vₜ pour la mesure de sertissage pré-réglée dans une mémoire ;
- calcul d'une valeur d'usure totale V attendue, par l'addition des valeurs de pronostic d'usure prédéfinies Vₜ lors de l'actionnement détecté ;
- vérification si la valeur d'usure totale V calculée par la somme a atteint une valeur limite définie V_{G} et émission d'une invitation à un calibrage si tel est le cas.

2. Procédé selon la revendication 1, **caractérisé en ce que** la détection de l'actionnement est fonction du déclenchement d'un interrupteur de fin de course ou de la détection d'une force d'actionnement pré-définie sur la pince manuelle calculée par un capteur de force.

3. Procédé selon la revendication 1 ou 2, **caractérisé en ce que** les valeurs de pronostic d'usure Vₜ par mesure de sertissage m_{P} sont stockées dans une mémoire (44).

4. Procédé selon la revendication 2, dans la mesure où la force d'actionnement est calculée, **caractérisé en ce que** la valeur de pronostic d'usure est calculée par la somme de valeurs de pronostic d'usure qui sont fonction de la force, lesquelles sont stockées dans une mémoire.

5. Procédé selon l'une des revendications 1 à 4, **caractérisé en ce qu'**un message sur le statut d'usure est émis et/ou qu'un signal de blocage est généré lorsque la valeur d'usure totale V dépasse la valeur limite V_{G} définie.

6. Agencement de surveillance de l'usure d'une pince manuelle au moyen d'un procédé selon l'une des revendications 1 à 5, **caractérisé par** :
- une mémoire de données (44) dans laquelle des valeurs de pronostic d'usure prédéfinies Vₜ sont stockées ;
- un moyen pour détecter l'actionnement de la pince manuelle ;
- une unité de calcul pour faire la somme des valeurs de pronostic d'usure par actionnement détecté en une valeur d'usure totale V ;
- une unité d'affichage (26) pour afficher un message lorsque la valeur d'usure totale V calculée par la somme atteint une valeur limite définie V_{G}.

7. Agencement selon la revendication 6, **caractérisé en ce que** le moyen pour détecter l'actionnement comprend un interrupteur de fin de course (31) ou un capteur de force.

8. Agencement selon la revendication 6 ou 7, **caractérisé en ce que** la mémoire de données (44) et l'unité de calcul sont formés par un système de micro-contrôleur et l'unité d'affichage est un affichage numérique (26) couplé au système de micro-contrôleur.

9. Pince manuelle avec éléments de sertissage qui peuvent être sertis sur une pièce, **caractérisé en ce qu'**elle comprend un agencement pour calculer l'usure selon l'une des revendications 6 à 8.

10. Agencement selon la revendication 9, **caractérisé en ce que** la mesure de sertissage m_{P}, l'usure totale V calculée ou bien une durée de vie restante peuvent être affichées au choix sur l'unité d'affichage (26).
